# EUROPÄISCHE PATENTANMELDUNG

(11) **EP 4 825 296 A1**
(43) Veröffentlichungstag der Anmeldung: **21.10.2026**
(21) Anmeldenummer: 26160375.7
(22) Anmeldetag: 24.02.2026
(51) Int. Cl.: A47L 11/40, A47L 13/256

(54) **BEZUGSEINHEIT FÜR EINE DAMPFREINIGUNGSEINHEIT**

(30) Priorität: 16.04.2025 DE 102025114850
(71) Anmelder: Carl Freudenberg KG, 69469 Weinheim (DE)
(72) Erfinder: Winterling, Friedel, 68161 Mannheim (DE)

(57) **Zusammenfassung**

Die Erfindung betrifft eine Bezugseinheit (10) für eine Dampfreinigereinheit (100) mit einer ersten Schicht (12), einer zweiten Schicht (14) und einer Zwischenschicht (16), wobei die erste Schicht (12) dazu eingerichtet ist, die Bezugseinheit (10) an der Dampfreinigereinheit (100) anzuordnen, wobei die zweite Schicht (14) dazu eingerichtet ist, eine Oberfläche (200) zu reinigen, wobei die Bezugseinheit (10) dazu eingerichtet ist, einen Dampfstrom (18) an der ersten Schicht (12) aufzunehmen und an der zweiten Schicht (14) auszugeben, um eine Reinigungsleistung bereitzustellen, wobei die Zwischenschicht (16) zwischen der ersten Schicht (12) und der zweiten Schicht (14) angeordnet ist, wobei die Bezugseinheit (10) dazu eingerichtet ist, den Dampfstrom durch die Zwischenschicht (16) zu leiten, um eine Wärmeübertragung zwischen der ersten Schicht (12) und der zweiten Schicht (14) anzupassen.

## Beschreibung

### Technisches Gebiet

Die Erfindung betrifft eine Bezugseinheit für eine Dampfreinigungseinheit sowie eine Dampfreinigungseinheit.

### Stand der Technik

Derzeit besteht eine Vielzahl von unterschiedlichen Lösungen zum Ausbilden von Bezügen für Dampfreinigungseinheiten. Durch die zunehmende Anzahl an Einsatzszenarien von Dampfreinigern steigt kontinuierlich der Bedarf an innovativen und robusten Lösungen für Dampfreiniger und deren Bezüge.

### Darstellung der Erfindung

Mit Ausführungsformen der Erfindung kann vorteilhafterweise eine verbesserte Bezugseinheit für eine Dampfreinigereinheit bereitgestellt werden. Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Vorteil der Bezugseinheit mit den Merkmalen des Anspruchs 1 ist, dass eine Standzeit einer Dampfreinigungseinheit mit der Bezugseinheit erhöht werden kann, bevor eine kritische Temperatur an einem Boden oder Oberfläche erreicht wird. Bevorzugt kann dies mithilfe einer Zwischenschicht der Bezugseinheit erreicht werden, welche eine Wärmeübertragung von der Dampfreinigungseinheit zu einer reinigenden Oberfläche verzögert bzw. dessen Wärmetransfers anpasst. Somit kann die zu reinigende Oberfläche vor einer zu großen Hitze geschützt werden. Weiter bevorzugt sind die zusätzlichen Herstellkosten der Bezugseinheit gering. Ein weiterer Vorteil ist, dass trotz der Verzögerung des Hitzetransfers die Reinigungsleistung der Bezugseinheit konstant bleibt.

Dies wird erfindungsgemäß dadurch erreicht, dass die Bezugseinheit für eine Dampfreinigungseinheit eine erste Schicht, eine zweite Schicht und eine Zwischenschicht aufweist, wobei die erste Schicht dazu eingerichtet ist, die Bezugseinheit an der Dampfreinigungseinheit anzuordnen, wobei die zweite Schicht dazu eingerichtet ist, eine Oberfläche zu reinigen, wobei die Bezugseinheit dazu eingerichtet ist, einen Dampfstrom an der ersten Schicht aufzunehmen und an der zweiten Schicht auszugeben, um eine Reinigungsleistung bereitzustellen, wobei die Zwischenschicht zwischen der ersten Schicht und der zweiten Schicht angeordnet ist, wobei die Bezugseinheit dazu eingerichtet ist, den Dampfstrom durch die Zwischenschicht zu leiten, um eine Wärmeübertragung zwischen der ersten Schicht und der zweiten Schicht anzupassen.

In anderen Worten kann mittels der Zwischenschicht die Wärmeübertragung zwischen der ersten Schicht und der zweiten Schicht angepasst werden, sodass die Temperatur des Dampfstroms an der ersten Schicht nur langsam an die zweite Schicht übertragen wird. Somit kann ein Aufheizen der Oberfläche verzögert werden. Weiter bevorzugt kann ein Anpassen einer Wärmeübertragung insbesondere ein Verlangsamen des Aufheizens der zweiten Schicht und/oder der Oberfläche bzw. des Bodens bedeuten. Weiter bevorzugt kann es sich bei der Zwischenschicht beispielsweise um ein Polyestermaterial handeln oder Ähnliches. Das Polyestermaterial kann beispielsweise ein Flächengewicht von 180 g pro qm aufweisen. Weiter bevorzugt kann die Zwischenschicht eine Webdichte von insbesondere 180 Warp und 110 Weft pro 10 cm aufweisen. Weiter bevorzugt ist der Yarndurchmesser ca. 300 Denier. Bei dem Auszug kann es sich bei der Zwischenschicht insbesondere um eine dünne Textillage handeln. Weiter bevorzugt kann die erste Schicht und die zweite Schicht aus einer Vielzahl von Materialien ausgewählt werden oder Ähnlichem. Ein Beispiel kann beispielsweise sein, dass die erste Schicht aus einem Velours und die zweite Schicht aus einem Mikrofasermaterial zumindest teilweise besteht. Weiter bevorzugt können die erste Schicht, die zweite Schicht und die Zwischenschicht miteinander vernäht, verschweißt oder verklebt werden oder Ähnliches. Weiter bevorzugt kann die Zwischenschicht ein dichtes Gewebe, Gewirke, Vliesstoff oder Ähnliches sein, um die Wärmeübertragung zwischen der ersten Schicht und der zweiten Schicht zu definieren bzw. anzupassen.

Die Unteransprüche zeigen bevorzugt die Weiterbildung der Erfindung.

Bevorzugt ist die Bezugseinheit dazu eingerichtet, eine Aufheizrate der zweiten Schicht mittels der Zwischenschicht einzustellen, wenn die Bezugseinheit im Wesentlichen frei von einer Relativbewegung zwischen der Oberfläche und der Bezugseinheit ist.

Ein Vorteil dieser Ausführungsform ist, dass durch die definierte Aufheizrate, insbesondere bei einer stehenden Dampfreinigereinheit, die zweite Schicht erst langsamer aufgeheizt wird. Somit kann insbesondere eine Erwärmung des zu reinigenden Bodens verzögert werden als auch eine unnötige Belastung des zu reinigend Bodens vermieden werden.

Vorzugsweise ist eine Dicke der Zwischenschicht dazu eingerichtet, die Aufheizrate der zweiten Schicht zu definieren.

Ein Vorteil dieser Ausführungsform ist, dass durch die Veränderung bzw. Einstellung der Dicke der Zwischenschicht die Aufheizrate der zweiten Schicht gezielt eingestellt werden kann. Beispielsweise wird ein Aufheizen der zweiten Schicht durch eine dickere Zwischenschicht verlangsamt. Weiter bevorzugt kann die Dicke derart gewählt werden, dass eine Verlangsamung der Aufheizrate der zweiten Schicht maximal ist, jedoch dabei die Reinigungsleistung der Dampfreinigungseinheit bzw. der Bezugseinheit aufrechterhalten wird bzw. unverändert bleibt.

Weiter bevorzugt ist eine Art des Gewebes dazu eingerichtet, die Aufheizrate der zweiten Schicht zu definieren. Ein Vorteil dieser Ausführungsform ist, dass mithilfe einer Anpassung einer Art des Gewebes, wie beispielsweise doppelt gewebte oder verstärkte Gewebe, sowie deren Webart die Aufheizrate gezielt angepasst bzw. definiert werden kann, um somit ein Aufheizverhalten der zweiten Schicht zu definieren.

Weiter bevorzugt sind die Dicke der Zwischenschicht und/oder die Art des Gewebes der Zwischenschicht dazu eingerichtet, einen Pfad der Aufheizrate über eine Zeitdauer und eine Temperaturveränderung zu definieren, wobei ein Beginn der Zeitdauer ein Zeitpunkt ist, an welchem die Bezugseinheit im Wesentlichen frei von der Relativbewegung ist.

Ein Vorteil dieser Ausführungsform ist, dass anhand der Dicke und/oder der Art des Gewebes der Zwischenschicht vorausgesagt werden kann, wie lange es dauert, bis der Dampfreiniger eine Oberfläche bzw. einen Boden aufheizt, wenn dieser auf einem Punkt steht. Somit können entsprechende Gegenmaßnahmen oder Ähnliches ergriffen werden.

Vorzugsweise weist die erste Schicht zumindest teilweise einen Veloursbereich auf, welcher dazu eingerichtet ist, eine form- und/oder kraftschlüssige Verbindung mit der Dampfreinigungseinheit auszubilden, um die Bezugseinheit an der Reinigungseinheit anzuordnen.

Ein Vorteil dieser Ausführungsform ist, dass die Bezugseinheit einfach auszuwechseln ist, da zwischen der Dampfreinigungseinheit bzw. der Bezugseinheit eine Art Klettverschluss oder Ähnliches ausgebildet werden kann. Beispielsweise weist die Bezugseinheit einen Velours teilweise oder sich voll erstreckend über die Bezugseinheit auf oder Ähnliches. Bevorzugt sind an der Dampfreinigungseinheit Velcrohaken oder Ähnliches angeordnet, um somit eine form- und/oder kraftschlüssige Verbindung zwischen der Bezugseinheit und der Dampfreinigungseinheit herstellen zu können.

Weiter bevorzugt weist die zweite Schicht zumindest teilweise einen Mikrofaserbereich auf, welcher dazu eingerichtet ist, in Zusammenwirkung mit dem Dampfstrom die Reinigungsleistung bereitzustellen.

Ein Vorteil dieser Ausführungsform ist, dass mithilfe des Mikrofaserbereiches ebenso eine effektive menchanische Reinigungswirkung bereitgestellt werden kann zusätzlich zu der Dampfreinigung. Bevorzugt kann der Mikrofaserbereich sich teilweise oder ganz über die Bezugseinheit erstrecken oder Ähnliches.

Ein weiterer Aspekt der Erfindung betrifft eine Dampfreinigungseinheit aufweisend eine Bezugseinheit, wie voranstehend und nachfolgend beschrieben.

Weiter bevorzugt weist die Dampfreinigungseinheit eine Dampfquelle auf, welche dazu eingerichtet ist, einen Dampfstrom an der Bezugseinheit bereitzustellen, wobei die Dampfreinigungseinheit dazu eingerichtet ist, basierend auf einer Nutzereingabe eine Flussrate des Dampfstroms anzupassen, wobei die Bezugseinheit dazu eingerichtet ist, basierend auf der Flussrate des Dampfstroms die Wärmeübertragung zwischen einer ersten Schicht in der Bezugseinheit und einer zweiten Schicht der Bezugseinheit mittels einer Zwischenschicht anzupassen.

Ein Vorteil dieser Ausführungsform ist, dass sich das Aufheizverhalten der zweiten Schicht in der Bezugseinheit in Abhängigkeit der Flussrate des Dampfstroms als auch durch die Ausgestaltung der Zwischenschicht anpassen lässt. Somit kann insbesondere bei Orten, wo eine geringe Heizleistung vonnöten ist, diese durch die Verwendung der Bezugseinheit als auch durch die Anpassung der Flussrate des Dampfstroms entsprechend angepasst werden. Weiter bevorzugt kann sich hierdurch ein synergetischer Effekt bilden, welcher eine hohe Reinigungsleistung bei einer geringen Belastung der Oberfläche bzw. des Bodens bereitstellen kann.

Vorzugsweise ist die Dampfreinigungseinheit dazu eingerichtet, trotz des Anpassens der Wärmeübertragung zwischen der ersten Schicht der Bezugseinheit und der zweiten Schicht der Bezugseinheit eine Oberfläche zur Reinigung der zweiten Schicht in einem vorbestimmten Temperaturbereich zu halten.

Ein Vorteil dieser Ausführungsform ist, dass die Oberfläche zur Reinigung die notwendige Temperatur aufweist, um den gewünschten Reinigungseffekt zu erzielen und dabei gleichzeitig eine zeitnahe Überhitzung der Oberfläche vermieden wird, wenn die Dampfreinigungseinheit nicht bewegt wird. Bspw. kann der vorbestimmte Temperaturbereich zwischen 70°C und 100°C liegen und bevorzugt zwischen 80°C und 98°C.

Sämtliche Offenbarungen, welche voranstehend und nachfolgend in Bezug auf einen Aspekt der Erfindung beschrieben sind, gelten gleichermaßen für alle weiteren Aspekte der Erfindung.

Nachfolgend werden Ausführungsbeispiele der Erfindung unter Bezugnahme auf die begleitenden Zeichnungen im Detail beschrieben.

### Zeichnungen

Fig. 1 zeigt eine Bezugseinheit gemäß einer Ausführungsform.
Figuren 2 und 3 zeigen ein Diagramm zur Illustration der Funktionsweise der Bezugseinheit.
Fig. 4 zeigt eine Bezugseinheit gemäß einer Ausführungsform.
Fig. 5 zeigt eine Dampfreinigungseinheit gemäß einer Ausführungsform.

### Ausführungsformen der Erfindung

Die Figuren sind lediglich schematisch und nicht maßstabsgetreu. In den Figuren können gleiche, gleichwirkende oder ähnliche Elemente mit den gleichen Bezugszeichen verwendet werden.

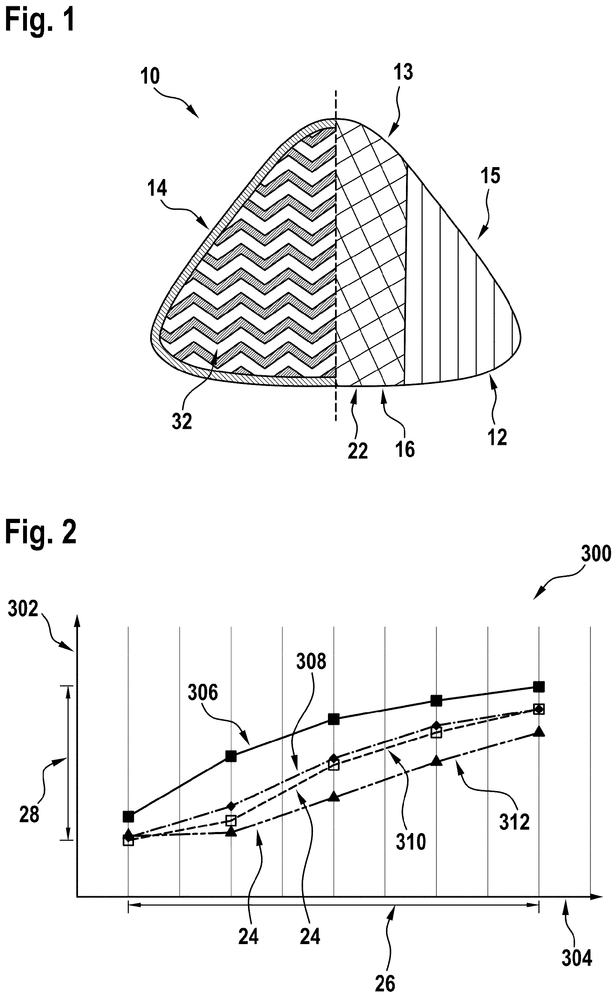

Fig. 1 zeigt eine Bezugseinheit 10 gemäß einer Ausführungsform. Die Bezugseinheit 10 für eine Dampfreinigungseinheit 100 weist eine erste Schicht 12, eine zweite Schicht 14 und eine Zwischenschicht 16 auf, wobei die erste Schicht 12 dazu eingerichtet ist, die Bezugseinheit 10 an der Dampfreinigungseinheit 100 anzuordnen, wobei die zweite Schicht 14 dazu eingerichtet ist, eine Oberfläche 200 zu reinigen, wobei die Bezugseinheit 10 dazu eingerichtet ist, einen Dampfstrom 18 an der ersten Schicht 12 aufzunehmen und an der zweiten Schicht 14 auszugeben, um eine Reinigungsleistung bereitzustellen, wobei die Zwischenschicht 16 zwischen der ersten Schicht 12 und der zweiten Schicht 14 angeordnet ist, wobei die Bezugseinheit 10 dazu eingerichtet ist, den Dampfstrom durch die Zwischenschicht 16 zu leiten, um eine Wärmeübertragung zwischen der ersten Schicht 12 und der zweiten Schicht 14 anzupassen.

Wie in der Fig. 1 dargestellt, weist die Bezugseinheit 10 eine zweite Schicht 14 auf, welche dazu dient, eine Oberfläche 200 zu reinigen. Beispielsweise kann die zweite Schicht 14 einen Mikrofaserbereich 32 aufweisen, um die Reinigungsleistung zu verbessern. Eine erste Schnittebene 13 der Bezugseinheit 10 zeigt die Zwischenschicht 16, welche zwischen der ersten Schicht 12 und der zweiten Schicht 14 angeordnet ist. Beispielsweise kann eine Art des Gewebes 22 der Zwischenschicht 16 dazu eingerichtet sein, eine Aufheizrate der zweiten Schicht 14 zu definieren. Wie in der Fig. 1 dargestellt, weist eine zweite Schnittansicht 15 der Bezugseinheit 10 die erste Schicht 12 auf. Die erste Schicht 12 dient dazu, die Bezugseinheit 10 an der Dampfreinigungseinheit 100 anordnen zu können.

Fig. 2 zeigt ein Diagramm 300 zur Illustration der Funktionsweise der Dampfreinigungseinheit 100 gemäß einer Ausführungsform. Das Diagramm 300 weist eine erste Achse 302 auf, auf welcher die Temperatur aufgetragen ist. Das Diagramm 300 weist ferner eine zweite Achse 304 auf, auf welchem die Zeit aufgetragen ist. Ferner weist das Diagramm 300 vier Messverläufe 306, 308, 310 und 312 auf. Die Messverläufe 306, 308, zeigen eine Aufheizrate eines Bodens ohne die Bezugseinheit 10. Dabei stellt der Verlauf 306 eine Erwärmung des Bodens oder der Oberfläche 200 bei einer hohen Durchflussrate an Dampf dar. Der Messverlauf 308 zeigt die Erwärmung des Bodens oder der Oberfläche 200 bei einer niedrigen Durchströmungsrate mit Dampf. Sowohl der Messverlauf 306 als auch der Messverlauf 308 liegen oberhalb des Messverlaufs 310, welcher die Bezugseinheit 10 bei einer hohen Dampfdurchflussrate zeigt. Ferner zeigt der Verlauf 312 die Erwärmung des Bodens bei der Verwendung der Bezugseinheit 10 bei einer geringeren Dampfdurchflussrate. Weiter bevorzugt kann eine Dicke 20 der Zwischenschicht 16 und/oder eine Art des Gewebes 22 der Zwischenschicht 16 den Verlauf des Pfades 24 der Aufheizrate über einen Zeitraum 26 und eine Temperaturveränderung 28 definieren bzw. einstellen. Bevorzugt beginnt die Zeitdauer 26 bei einem Zeitpunkt, an welchem die Bezugseinheit im Wesentlichen frei von der Relativbewegung 202 ist. Mit anderen Worten stellen die Messverläufe 306, 308, 310, 312 die Aufheizung des Bodens bzw. einer Oberfläche 200 dar, wenn der Dampfreiniger nicht bewegt wird. Wie klar in der Fig. 2 zu erkennen ist, heizt sich der Boden bzw. die Oberfläche 200 unter Verwendung der Bezugseinheit 10 wie voranstehend und nachfolgend beschrieben deutlich langsamer auf, sodass eine höhere Verweilzeit der Dampfreinigungseinheit erreicht werden kann.

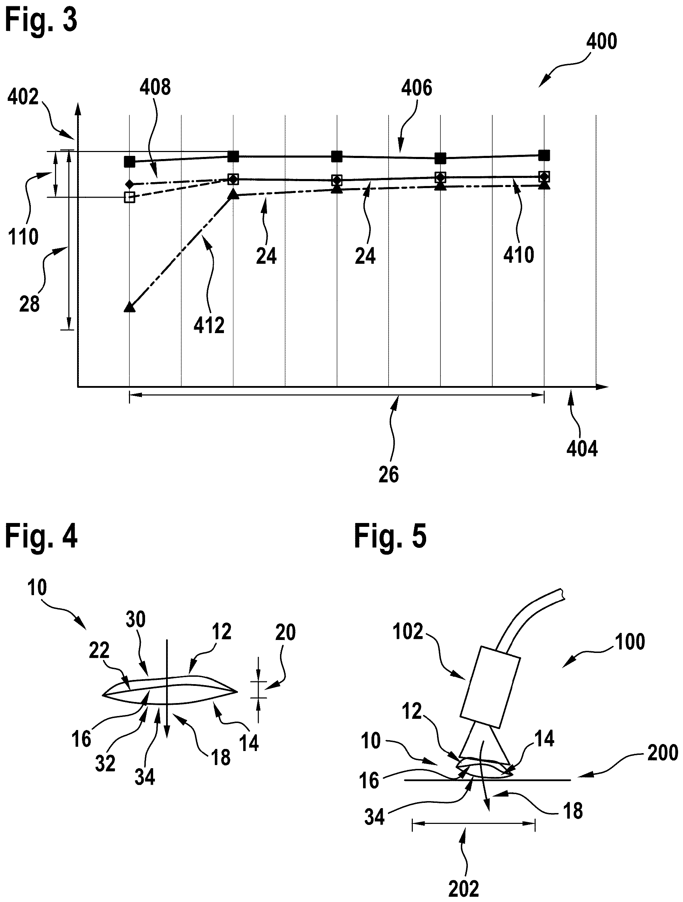

Fig. 3 zeigt ein Diagramm 400 gemäß einer Ausführungsform. Das Diagramm 400 weist eine erste Achse 402, auf welchem die Temperatur aufgetragen ist. Das Diagramm 400 weist zudem eine zweite Achse 404 auf, auf welchem die Zeit aufgetragen ist. Weiter bevorzugt sind die Messverläufe 406, 408, 410 und 412 in der Figur 3 dargestellt. Die Messverläufe 406, 408, 410, 412 zeigen eine Temperatur der zweiten Schicht 414, wenn die Dampfreinigungseinheit 100 nicht bewegt wird. Wie zu erkennen ist, sind die Messverläufe 406, 408, 410 und 412 für einen vorbestimmten Temperaturbereich 110. Dabei sind die Messverläufe 406 und 408 im wesentlich gleichen Temperaturfenster wie die Messverläufe 410 und 412. Die Messverläufe 406 und 408 wurden in einer Dampfreinigungseinheit 100 ohne die Bezugseinheit 10 aufgezeichnet. Die Messverläufe 410 und 412 wurden mit einer Dampfreinigungseinheit 100 mit der Bezugseinheit 10 aufgenommen. Somit kann aus der Fig. 3 abgeleitet werden, dass jede Reinigungsleistung der Bezugseinheit 10 im Wesentlichen konstant bzw. ähnlich der einer Dampfreinigungseinheit ohne Bezugseinheit ist.

Fig. 4 zeigt eine Bezugseinheit 10 gemäß einer Ausführungsform. Die Bezugseinheit 10 weist dabei eine erste Schicht 12, eine zweite Schicht 14 sowie eine Zwischenschicht 16 auf. Der Dampfstrom 18 trifft auf die erste Schicht und wird durch die Zwischenschicht 16 als auch durch die zweite Schicht 14 geleitet. Weiter bevorzugt kann die Art und Weise wie die Wärme von der ersten Schicht 12 auf die zweite Schicht 14 übertragen wird mittels der Zwischenschicht 16 und insbesondere einer Dicke 20 und/oder einer Art des Gewebes 22 der Zwischenschicht 16 eingestellt werden. Weiter bevorzugt kann die erste Schicht 12 einen Veloursbereich 30 aufweisen, um die Bezugseinheit 10 an der Dampfreinigungseinheit 100 anzuordnen. Weiter bevorzugt weist die zweite Schicht 14 einen Mikrofaserbereich 32 auf, um eine Reinigungsleistung zu verbessern bzw. in Kombination mit dem Dampfstrom 18 die Reinigungsleistung der Bezugseinheit bereitstellen zu können.

Fig. 5 zeigt eine Dampfreinigungseinheit 100 gemäß einer Ausführungsform. Die Dampfreinigungseinheit 100 weist eine Dampfquelle 102 auf, welche dazu eingerichtet ist, den Dampfstrom 18 für die Bezugseinheit 10 bereitzustellen. Ferner kann der Dampfstrom 18 durch die Bezugseinheit 10 geführt werden, um somit eine Reinigung der Oberfläche 200 zu erreichen. Weiter bevorzugt ist eine erste Schicht 12 der Bezugseinheit 10 an der Dampfreinigungseinheit 100 angeordnet. Zwischen der zweiten Schicht 14, welche in Kontakt mit der Oberfläche 200 stehen kann, ist eine Zwischenschicht 16 angeordnet, um somit ein Wärmeübertragungsverhalten von der ersten Schicht 12 an die zweite Schicht 14 einstellen zu können. Weiter bevorzugt weist die zweite Schicht 14 der Bezugseinheit 10 eine Oberfläche 34 zur Reinigung der Oberfläche 200 auf. Bevorzugt kann die Dampfreinigungseinheit über die Oberfläche 200 geführt werden, um somit eine Relativbewegung 202 auszubilden.

## Patentansprüche

1. Bezugseinheit (10) für eine Dampfreinigereinheit (100) aufweisend:
- eine erste Schicht (12),
- eine zweite Schicht (14),
- eine Zwischenschicht (16),
wobei die erste Schicht (12) dazu eingerichtet ist, die Bezugseinheit (10) an der Dampfreinigereinheit (100) anzuordnen, wobei die zweite Schicht (14) dazu eingerichtet ist, eine Oberfläche (200) zu reinigen, wobei die Bezugseinheit (10) dazu eingerichtet ist, einen Dampfstrom (18) an der ersten Schicht (12) aufzunehmen und an der zweiten Schicht (14) auszugeben, um eine Reinigungsleistung bereitzustellen, wobei die Zwischenschicht (16) zwischen der ersten Schicht (12) und der zweiten Schicht (14) angeordnet ist, wobei die Bezugseinheit (10) dazu eingerichtet ist, den Dampfstrom durch die Zwischenschicht (16) zu leiten, um eine Wärmeübertragung zwischen der ersten Schicht (12) und der zweiten Schicht (14) anzupassen.

2. Bezugseinheit (10) nach Anspruch 1, wobei die Bezugseinheit (10) dazu eingerichtet ist, eine Aufheizrate der zweiten Schicht (14) mittels der Zwischenschicht (16) einzustellen, wenn die Bezugseinheit (10) im Wesentlichen frei von einer Relativbewegung (202) zwischen der Oberfläche (200) und der Bezugseinheit (10) ist.

3. Bezugseinheit (10) nach Anspruch 2, wobei eine Dicke (20) der Zwischenschicht (16) dazu eingerichtet ist, die Aufheizrate der zweiten Schicht (14) zu definieren.

4. Bezugseinheit (10) nach einem der Ansprüche 2 bis 3, wobei eine Art des Gewebes (22) dazu eingerichtet ist, die Aufheizrate der zweiten Schicht (14) zu definieren.

5. Bezugseinheit (10) nach einem der Ansprüche 3 oder 4, wobei die Dicke (20) der Zwischenschicht (16) und/oder die Art des Gewebes (22) der Zwischenschicht (16) dazu eingerichtet sind, einen Pfad (24) der Aufheizrate über eine Zeitdauer (26) und eine Temperaturveränderung (28) zu definieren, wobei ein Beginn der Zeitdauer (26) ein Zeitpunkt ist, an welchem die Bezugseinheit (10) im Wesentlichen frei von der Relativbewegung (202) ist.

6. Bezugseinheit (10) nach einem der vorherigen Ansprüche, wobei die erste Schicht (12) zumindest teilweise einen Velourbereich (30) aufweist, welcher dazu eingerichtet ist, eine form- und/oder kraftschlüssige Verbindung mit der Dampfreinigungseinheit (100) auszubilden, um die Bezugseinheit (10) an der Dampfreinigungseinheit (100) anzuordnen.

7. Bezugseinheit (10) nach einem der vorherigen Ansprüche, wobei die zweite Schicht (14) zumindest teilweise einen Mikrofaserbereich (32) aufweist, welcher dazu eingerichtet ist, in Zusammenwirkung mit dem Dampfstrom (18) die Reinigungsleistung bereitzustellen.

8. Dampfreinigungseinheit (100) aufweisend eine Bezugseinheit (10) nach einem der vorherigen Ansprüche.

9. Dampfreinigungseinheit (100) nach Anspruch 8, aufweisend eine Dampfquelle 102, welche dazu eingerichtet ist, einen Dampfstrom 18 an der Bezugseinheit (100) bereitzustellen, wobei die Dampfreinigungseinheit (100) dazu eingerichtet ist, basierend auf einer Nutzereingabe eine Flussrate des Dampfstroms (18) anzupassen, wobei die Bezugseinheit (10) dazu eingerichtet ist, basierend auf der Flussrate des Dampfstroms (18) die Wärmeübertragung zwischen einer ersten Schicht (12) der Bezugseinheit (10) und einer zweiten Schicht (14) der Bezugseinheit (10) mittels einer Zwischenschicht (16) anzupassen.

10. Dampfreinigungseinheit (100) nach einem der Ansprüche 8 bis 9, wobei die Dampfreinigungseinheit (100) dazu eingerichtet ist, trotz des Anpassens der Wärmeübertragung zwischen der ersten Schicht (12) der Bezugseinheit (10) und der zweiten Schicht (14) der Bezugseinheit (10) eine Oberfläche (34) zur Reinigung der zweiten Schicht (14) in einem vorbestimmten Temperaturbereich (110) zu halten.
